Europäisches Patentamt

European Patent Office

Office européen des brevets

(19)

(11) Veröffentlichungsnummer: **0 261 660 B1**

(12) # EUROPÄISCHE PATENTSCHRIFT

(45) Veröffentlichungstag der Patentschrift: **30.10.91**

(51) Int. Cl.⁵: **B60T 7/20**

(21) Anmeldenummer: **87113906.9**

(22) Anmeldetag: **23.09.87**

(54) **Radbremse für Anhänger.**

(30) Priorität: **26.09.86 DE 8625753 U**
       **07.05.87 DE 8706527 U**

(43) Veröffentlichungstag der Anmeldung:
       **30.03.88 Patentblatt 88/13**

(45) Bekanntmachung des Hinweises auf die
       Patenterteilung:
       **30.10.91 Patentblatt 91/44**

(84) Benannte Vertragsstaaten:
       **DE ES FR GB IT NL SE**

(56) Entgegenhaltungen:
       **DD-A- 238 949        DE-A- 2 161 559**
       **DE-A- 2 338 632      DE-A- 2 364 822**
       **DE-A- 3 024 566      FR-A- 2 202 560**
       **FR-A- 2 442 379      GB-A- 2 098 289**

(73) Patentinhaber: **AL-KO KOBER AG**
       **Ichenhauser Strasse 14**
       **W-8871 Kötz 2(DE)**

(72) Erfinder: **Schwegler, Helmut**
       **Ortsstrasse 10**
       **W-8871 Kötz(DE)**
       Erfinder: **Köhler, Robert, Ing. grad.**
       **Kemnat 126 b**
       **W-8871 Burtenbach(DE)**

(74) Vertreter: **Ernicke, Hans-Dieter, Dipl.-Ing. et al**
       **Schwibbogenplatz 2b**
       **W-8900 Augsburg(DE)**

## Beschreibung

Die Erfindung betrifft eine Radbremse mit den Merkmalen im Oberbegriff des Hauptanspruches.

Eine derartige Radbremse ist aus der DE-A-30 24 566 bekannt. Deren Bremsbacken weichen bei Rückwärtsfahrt im Rahmen der Betätigung durch die Auflaufeinrichtung aus und kommen erst bei Betätigung durch die Handbremseinrichtung voll zur bremsenden Anlage an der Trommel. Die beiden Bremsbacken sind an einem Ende durch ein Lenkergetriebe miteinander verbunden. Hierdurch entsteht beim Bremsen in Rückwärtsfahrt ein Servo-Effekt. Die beiden Bremsbacken liegen ständig am Lenkergetriebe an. Dies hat zur Folge, daß auch bei Betätigung durch die Handbremseinrichtung eine gegenseitige Annäherung der beiden Bremsbacken erfolgt, so daß sich deren Ausweichbewegung und der Servo-Effekt in unerwünschter Weise überlagern.

Aus der DD-A-238 949 ist eine weitere Radbremse bekannt, bei der die Bremsbacken beim Bremsen in Rückwärtsfahrt ausweichen können. Hierzu stützt sich die eine Bremsbacke über ein Federelement an einem Festanschlag ab. Ist der durch das Federelement vorgegebene Ausweichweg erschöpft, stützt sich diese Bremsbacke ortsfest ab, so daß die Radbremse zum Bremsen in Rückwärtsfahrt als Simplex-Bremse funktioniert.

Ähnliche Radbremsen sind in vielfacher Ausführungsform vorbekannt, beispielsweise aus der DE-A-21 61 559, DE-A-23 38 632 und DE-A-23 64 822. In allen Fällen handelt es sich auch hier um Radbremsen für auflaufgebremste Anhänger, deren Bremsbacken beim Rückwärtsfahrt ausweichen und dadurch die Bremswirkung aufheben. Die Ausweichbewegung der Bremsbacken wird ermöglicht durch ein zwischen den Bremsbacken angeordnetes, ausweichfähig gelagertes Übertragungsglied in Form eines Nockens, Lenkers oder dergleichen. Das Übertragungsglied schwenkt bei Rückwärtsfahrt und ermöglicht hierdurch eine gegenseitige Annäherung der Bremsbacken.

Die Ausweichbewegung der Bremsbacken ist so bemessen, daß über den Eintauchweg der Auflaufvorrichtung und den hierdurch erzeugten Spreizweg an der Zuspanneinrichtung kein Bremsen stattfindet. Die Radbremse kann in Rückwärtsfahrt nur über die Handbremseinrichtung betätigt werden, die an der Zuspanneinrichtung einen größeren Spreizweg erzeugen kann als die in ihrer Eintauchtiefe begrenzte Auflaufvorrichtung. Hierbei gelangt die bei Rückwärtsfahrt auflaufende Primär-Bremsbacke oder das von ihr beaufschlagte Übertragungsglied gegen einen Festanschlag, der die Ausweichbewegung begrenzt und an dem die Bremskräfte aufgebaut werden können. An diesem Festanschlag stützen sich sowohl die Primär-Bremsbacke, als dann auch die Sekundär-Bremsbacke ab. Die Radbremse arbeitet in diesem Sinne als einfache Simplex-Bremse.

Aus der DE-A-19 33 435 und der FR-A-2 222 899 sind ähnliche Radbremsen bekannt, bei denen eine oder beide Bremsbacken aus einem Bremsträger und einem darauf beweglich gelagerten Bremsschuh bestehen. Bei Rückwärtsfahrt weichen die Bremsschuhe in einwärts gerichteten Schlitzführungen gegenüber ihren vom Spreizschloß beaufschlagten Bremsträgern zurück und geraten hierdurch außer Eingriff mit der Bremstrommel. Um ein Bremsen in Rückwärtsfahrt zu ermöglichen, ist die Ausweichlänge der Schlitzführungen begrenzt, so daß die Bremsschuhe hier zur Anlage gelangen und ebenfalls Bremskräfte nach Art einer Simplex-Bremse aufbauen.

Dies hat den Nachteil, daß nur ein relativ niedriger Wirkungsgrad erzielt werden kann, wie er für Simplex-Bremsen typisch ist. Das hat zur Folge, daß für eine große Bremsleistung, beispielsweise für schwere Anhänger, sehr hohe Handkräfte am Handbremshebel benötigt werden. Außerdem muß der Federspeicher, soweit er für die Feststellbremse erforderlich ist, entsprechend kräftig ausgelegt werden.

Es ist daher Aufgabe der vorliegenden Erfindung, den Wirkungsgrad der Radbremse bei Rückwärtsfahrt zu erhöhen und die erforderlichen Handbremskräfte deutlich zu verringern.

Die Erfindung löst diese Aufgabe mit den Merkmalen des Hauptanspruches.

Die erfindungsgemäße Radbremse arbeitet bei Rückwärtsfahrt als Servobremse, bei der die auflaufende Primär-Bremsbacke auf die ablaufende Sekundär-Bremsbacke drückt und diese unter Erhöhung ihrer Bremswirkung gegen einen Festanschlag preßt. Hierdurch wird ein hoher Bremswirkungsgrad im Verein mit niedrigen Handbremskräften erzielt.

Die Servowirkung der Radbremse tritt nur beim Bremsen in Rückwärtsfahrt ein. Die Bremsbacken können bei Rückwärtsfahrt trotz eingefahrener Auflaufvorrichtung ausweichen. Erst bei weiterer Spreizung der Zuspanneinrichtung tritt das Stützglied in Aktion und führt zu einer gegenseitigen Abstützung der beiden Bremsbacken im Sinne des Servo-Effektes.

Um ein vollkommen bremsfreies Rückwärtsfahren und eine optimale Servowirkung zu ermöglichen, sollten die Spielwege und Abstände gemäß den Unteransprüchen aufeinander abgestimmt werden.

Vorteilhaft ist auch der Umstand, daß zum Erreichen der gewünschten Bremsleistung kleine Spreizwege an der Zuspanneinrichtung und damit kurze Wege am Handbremshebel notwendig sind. Dies erleichtert die Auslegung des Federspeichers, sofern ein solcher je nach Bremsengrundkonstruktion überhaupt noch nötig ist.

Die erfindungsgemäße Bremsgestaltung kann in Verbindung mit beliebigen auflaufgebremsten und bei Rückwärtsfahrt ausweichenden Grundbremskonstruktionen verwendet werden. Die Ausführungsbeispiele der Erfindung zeigen dies an verschiedenen Bremskonstruktionen. Es sind auch noch weitere Varianten hinsichtlich des Übertragungsgliedes, der Zuspanneinrichtung usw. möglich, etwa durch Verwendung von Hydraulikelementen.

Die konstruktive Ausgestaltung der erfindungsgemäßen Lehre kann gemäß der Ausführungsbeispiele in unterschiedlicher Weise vorgenommen werden. Im einfachsten Fall ist es möglich, die beiden Bremsbacken direkt miteinander zu verbinden. In diesem Fall kann das Stützglied beispielsweise durch eine Druckstange mit einer Schlitzführung gebildet werden, die die beiden Bremsbacken erst am Ende des durch die Auflaufvorrichtung bedingten Ausweichweges gegenseitig abstützt. Diese Ausführungsform bedingt allerdings eine eigene Nachstellvorrichtung am Stützglied zum Ausgleich des Bremsbelagverschleißes.

Statt der direkten Verbindung der beiden Bremsbacken ist es auch möglich, das Stützglied in einer Reihenanordnung zwischen der ablaufenden Sekundär-Bremsbacke und dem Übertragungsglied vorzusehen, das seinerseits direkt von der auflaufenden Primär-Bremsbacke beaufschlagt wird. In diesem Fall läßt das Stützglied ein Ausweichen des Übertragungsgliedes im gewünschten Maße zu und kommt erst bei größerer Spreizung der Zuspanneinrichtung in abstützenden Eingriff mit dem Übertragungsglied.

Zur Vereinfachung der Bremsennachstellung empfiehlt es sich, das Stützglied ablaufseitig nicht direkt an der Sekundär-Bremsbacke, sondern an einem Spannschloß angreifen zu lassen, das ohnehin zum Zwecke der Bremsennachstellung zwischen Sekundär-Bremsbacke und Übertragungsglied angeordnet ist.

In den Unteransprüchen sind weitere vorteilhafte Ausgestaltungen und verschiedene Ausführungsformen der erfindungsgemäßen Radbremse beschrieben.

Die Erfindung ist in den Zeichnungen beispielsweise und schematisch dargestellt. Im einzelnen zeigen:

Fig. (1)
: eine erfindungsgemäße Radbremse in Draufsicht,

Fig. (2)
: einen vergrößerten und teilweise abgebrochenen Schnitt durch die Radbremse gem. Schnittlinie II-II von Fig. (1),

Fig. (3)
eine Draufsicht auf ein Stützglied in Form eines Druckbügels gem. Pfeil A von Fig. (1),

Fig. (4)
eine vergrößerte und teilweise abgebrochene Draufsicht auf eine Radbremse in Variation zu Fig (1) und

Fig. (5) und (6)
erfindungsgemäße Radbemsen mit anderer Bremsgrundkonstruktion in Variation zu Fig. (1).

Fig. (1) bis (6) zeigen eine Radbremse (1) für auflaufgebremste Fahrzeuganhänger. Die Drehrichtungen für Vorwärts- und Rückwärtsfahrt sind durch Pfeile mit den Buchstaben V bzw. R gekennzeichnet. Die nachfolgenden Bezeichnungen als Primär- oder Sekundär-Bremsbacke beziehen sich jeweils auf die Rückwärtsdrehrichtung.

Die Radbremse (1) in Fig. (1) bis (4) ist als Innenbackenbremse mit einer Bremstrommel (2) und zwei Bremsbacken (3,4) ausgebildet, die von einer schwimmend gelagerten Zuspanneinrichtung (5), hier in Form eines mechanischen Spreizschlosses, beaufschlagt werden. An der Zuspanneinrichtung (5) greifen über Bowdenzüge, ein Bremsgestänge oder dergleichen die Auflaufvorrichtung an der Zugdeichsel und eine Handbremseinrichtung an, die beide nicht dargestellt sind. Auf der anderen Seite stützen sich die beiden Bremsbacken (3,4) über ein Spannschloß (12) und ein ausweichfähig gelagertes Übertragungsglied (6), hier in Gestalt eines Ausweichnockens ab. Die beiden Bremsbacken (3,4) und der Ausweichnocken (6) werden in ihren Sollagen durch Federn gehalten.

In Vorwärtsfahrt ist die Stützkraft der Bremsbacke (4) infolge der Auflaufwirkung wesentlich größer als die der Bremsbacke (3). Die Bremsbacke (4) drückt über das Spannschloß (12) auf den um eine ortsfeste Schwenkachse (10) drehbar gelagerten Ausweichnocken (6) und preßt diesen gegen die Bremsbacke (3). Die Bremsbacke (4) stützt sich bei Vorwärtsfahrtbremsung ohne merklichen Ausweichweg sofort ab, weil die Wirkungsachse des Spannschlosses (12) nahe der Schwenkachse (10) verläuft. Zufolge der großen Übersetzung des Ausweichnockens (6) sperrt dieser zugleich die Ausweichbewegung der Bremsbacke (3) mit der Folge, daß beim Spreizen beider Backen (3,4) diese sofort zur Abstützung gelangen.

Anders verhält sich die Radbremse (1) bei Spreizung der Bremsbacken (3,4) während der Rückwärtsfahrt. Aufgrund der umgedrehten Auflaufverhältnisse drückt die Primär-Bremsbacke (3) nunmehr mit größerer Kraft und Längerem Hebelarm auf den Ausweichnocken (6) als die ablaufende Sekundär-Bremsbacke (4). Hierdurch wird der Ausweichnocken (6) im Uhrzeigersinn verschwenkt. Da beide Bremsbacken (3,4) und die Zuspanneinrichtung (5) schwimmend gelagert sind, weichen beide Bremsbacken aus mit der Folge, daß im wesentlichen keine Bremswirkung eintritt.

Der mögliche Ausweichweg des Ausweichnockens ist beim Stand der Technik durch einen Festanschlag am ortsfesten Gehäuse des Spannschlosses begrenzt. Der Ausweichweg ist hierbei auf den durch die Auflaufvorrichtung verursachten Spreizweg der Zuspanneinrichtung abgestimmt, so daß über den begrenzten Eintauchweg der Auflaufvorrichtung und den dementsprechenden Spreizweg der Zuspanneinrichtung keine wirksame Anlage der Bremsbacken stattfindet Mit der Handbremseinrichtung ist ein größerer Spreizweg an der Zuspanneinrichtung erzeugbar, mit dem der Ausweichnocken zur Anlage am Festanschlag gebracht wird. In diesem Moment sind beide Bremsbacken am Festanschlag bzw. dem Gehäuse ortsfest abgestützt und entfalten ihre Bremswirkung als Simplex-Bremse.

Die erfindungsgemäße Radbremse (1) funktioniert bei Vorwärtsfahrt-Bremsen und bei Rückwärtsfahrt-Ausweichen unter Einwirkung der Auflaufvorrichtung in gleicher Weise wie die bekannte Radbremse. Bei einer weiteren Spreizung der Zuspanneinrichtung (5) findet jedoch keine ortsfeste Abstützung im Bereich zwischen den beiden Bremsbacken (3,4) statt. Dann drückt vielmehr die auflaufende Primär-Bremsbacke (3) über den Ausweichnocken (6) auf ein Stützglied (17) und weiter auf die ablaufende Sekundär-Bremsbacke (4). Diese stützt sich dann ihrerseits an einem Festanschlag (21) ab, der nahe der Zuspanneinrichtung (5) am Bremsschild (11) ortsfest angeordnet ist. Hierdurch entsteht ein Servo-Effekt, bei dem die auflaufende Primär-Bremsbacke (3) durch ihr Einwirken auf die ablaufende Sekundär-Bremsbacke (4) deren Stützkraft wesentlich erhöht und die Gesamtbremsleistung erheblich steigert.

Im Ausführungsbeispiel der Figuren (1,2 und 3) ist das Stützglied (17) als abgewinkelter Druckbügel (18) ausgebildet, der einerseits vom Ausweichnocken (6) mit Spiel über eine Schlitzführung (19) beaufschlagt wird und andererseits über das Spannschloß (12) auf die Sekundär-Bremsbacke (4) einwirkt.

Das Spannschloß (12) besteht aus einer Nachstellmutter (14), in der ein Schraubzapfen (13) längenverstellbar angeordnet ist, der am anderen Ende den Steg der Sekundär-Bremsbacke (4) formschlüssig umgreift. Die Nachstellmutter (14) ist ihrerseits axial freibeweglich in einem am Bremsschild (11) ortsfest gehaltenen Gehäuse (8) gelagert. Die Nachstellmutter (14) besitzt einen Bund (28), der umfangsseitig Zähne aufweist, in die eine am Gehäuse (8) befestigte Feder (15) sperrend eingreift. Die Nachstellmutter (14) liegt mit ihrem Boden (16) am Ausweichnocken (6) an und leitet hier die von der Sekundär-Bremsbacke (4) herrührenden Stützkräfte ein. Der Ausweichnocken (6) weist auf dieser Seite eine Anlaufkurve auf, die in Vorwärtsdrehrichtung eine bremswirksame Abstützung und in Rückwärtsdrehrichtung ein Ausweichen des Nockens gegenüber der Nachstellmutter (14) erlaubt. Auf der anderen Seite ist eine frei drehbare Führungsrolle (7) angeordnet, an der die Primär-Bremsbacke (3) angreift.

Zum Ausgleich des Bremsbelagverschleisses kann der Abstand zwischen den Bremsbacken (3,4) durch Herausdrehen des Schraubbolzens (13) vergrößert werden. Hierzu wird durch eine Öffnung im Bremsschild (11) die Nachstellmutter (14) verdreht.

Der Druckbügel (18) weist einen abgewinkelten Ringkragen (20) auf, mit dem er auf der Nachstellmutter (14) längsbeweglich geführt ist und sich hierbei in Druckrichtung am Bund (28) abstützt. Bei einem Nachstellen des Spannschlosses (12) wird hierdurch auch der Abstand des Druckbügels (18) von der Sekundär-Bremsbacke (4) verändert.

Der Druckbügel (18) besitzt an seinem anderen Ende einen Schlitz (19), in den der Ausweichnocken (6) mit Bewegungsspielraum greift. Durch die formschlüssige Führung des Ringkragens (20) auf der Nachstellmutter (14) wird der Druckbügel (18) in der in Fig. (1) gezeigten Lage gehalten. Der Ausweichnocken (6) weist eine in Drehrichtung rückversetzte Anschlagfläche (24) auf, mit der er nach Ausschöpfung des Bewegungsspieles zur Anlage am Schlitzgrund des Druckbügels (18) kommt. Hierdurch wird die Stützkraft der Primär-Bremsbacke (3) über den Ausweichnocken (6) mit seiner Führungsrolle (7) auf den Druckbügel (18) und von dort über das Spannschloß (12) auf die Sekundär-Bremsbacke (4) geleitet.

Das Bewegungsspiel am Stützglied (17) ist geringfügig größer als der auflaufbedingte Zuspannweg, wodurch eine gegenseitige Abstützung der Bremsbacken (3,4) erst bei zusätzlicher Spreizung der Zuspanneinrichtung (5) mittels der Handbremse erfolgt. Dazu sind die Tiefe des Schlitzes (19) und der Rückversatz der Anschlagfläche (24) entsprechend aufeinander abgestimmt. Zum Erreichen des Servoeffektes müssen beide Bremsbacken (3,4) dann in gegenseitiger Abstützstellung gemeinsam unter Mitnahme der Zuspanneinrichtung (5) gegenüber der Bremstrommel (2) noch ein Stück verdreht werden, bis die Sekundärbacke (4) am Festanschlag (21) anliegt. Für diese Bewegung braucht die Primärbacke (3) einen entsprechend großen Ausweichweg in Umfangsrichtung, der größer ist als die Summe des Bewegungsspiels am Stützglied (17) und des Abstands der Sekundärbacke (4) vom Festanschlag (21). Der Ausweichweg wird durch den frei drehbaren Ausweichnocken (6) freigegeben, der ohne Sperrwirkung den Bewegungen der Primärbacke (3) in Rückwärtsdrehrichtung folgt.

Fig. (4) zeigt eine Variation der erfindungsgemäßen Radbremse (1) mit einem außenseitig beaufschlagten Ausweichnocken (6), dessen ortsfeste Drehachse (10) unterhalb der Führungsrolle (7) liegt. Das Stützglied (17) ist hier als Schwenknokken (22) ausgebildet, der um eine ortsfeste Drehachse (25) frei schwenkbar gelagert ist. Der Achsbolzen ist hierzu in einem Flansch (23) des ortsfesten Gehäuses (8) gelagert, wobei der Schwenknocken (22) durch eine Öffnung des trichterförmigen Gehäusekragens ragt.

Der Ausweichnocken (6) ist gabelförmig gestaltet und besitzt hierzu zwei deckungsgleiche parallel zueinander angeordnete Scheiben (vgl. Fig. (2)). Der Ausweichnocken (6) umgreift damit den Schwenknocken (22) und stützt sich mit seiner Anlaufkurve am Boden (16) der Nachstellmutter (14) ab. Andererseits gestattet die Gabelform die ausweichende Schwenkbewegung des Ausweichnockens (6) über den Schwenknocken (22) hinweg.

Hierdurch hat der Schwenknocken (22) beim Bremsen in Vorwärtsdrehrichtung und beim Ausweichen bei Rückwärtsfahrt keine Wirkung und tritt erst bei Rückwärtsfahrt und einer weiteren Spreizung der Zuspanneinrichtung (5) in Funktion. Dann nämlich drückt der Ausweichnocken (6) mit seiner zwischen den beiden Scheiben gehaltenen Führungsrolle (7) gegen eine rückwärtige gerade Anlagefläche (27) des Schwenknockens (22). Dieser wird hierdurch verdreht und drückt mit seiner gegenüberliegenden nasenförmig gestalteten Anlagefläche (26) gegen den Boden (16) der Nachstellmutter (14). Hierdurch wird wiederum die Stützkraft der Primär-Bremsbacke (3) im Sinne einer Servo-Wirkung auf die Sekundär-Bremsbacke (4) geleitet. Durch den Angriff des Schwenknockens (22) an der Nachstellmutter (14) wird auch in diesem Ausführungsbeispiel eine gemeinsame Nachstellmöglichkeit für alle Bremsfunktionen verwendet.

Fig. (5) zeigt eine Variante der erfindungsgemäßen Radbremse (1), bei der das Übertragungsglied (6) als ein um eine ortsfeste Achse (10) schwenkbarer Übertragungsnocken (29) ausgebildet ist. Dieser besitzt eine schräggestellte Olive, an der beide Bremsbacken (3,4) anliegen. Die Primärbacke (3) greift dabei mit einem größeren Abstand gegenüber der Schwenkachse (10) an als die Sekundärbacke (4). Das Stützglied (17) ist hier als gerader Druckbügel (18) ausgebildet, der die beiden Bremsbacken (3,4) direkt miteinander verbindet.

Der Druckbügel (18) greift an der Sekundärbacke (4) über eine Schlitzführung (30) an, deren durch die Schlitzlänge bestimmtes Bewegungsspiel etwas größer als der auflaufbedingte Zuspannweg am Spannschloß (5) ist. Wie in den anderen Ausführungsbeispielen kann hierdurch die Primärbacke (3) unter Aufhebung der Bremswirkung bei Rückwärtsfahrt ausweichen. Hierbei dreht sich der Übertragungsnocken (29) mit und gestattet durch seine Übersetzung der Anlagepunkte eine Verringerung des Abstandes zwischen den beiden Bremsbacken (3,4).

Zum Bremsen in Rückwärtsfahrt stützt sich die Primärbacke (3) über den Druckbügel (18) unter Überbrückung des Übertragungsnockens (29) direkt an der Sekundärbacke (4) ab und drückt diese zum Aufbau der Servo-Bremskräfte gegen den Festanschlag (21). Hierbei schwenkt der Übertragungsnocken (29) ohne Sperrwirkung mit. Wie auch in den anderen Ausführungsbeispielen ist hier der Ausweichweg der Primärbacke (3) größer als die Summe des Bewegungsspiels in der Schlitzführung (30) und des Abstands der Sekundärbacke (4) vom Festanschlag (21).

Fig. (6) zeigt eine weitere Variante, in der die Radbremse (1) zumindest eine Bremsbacke (3) aufweist, die aus einem Bremsträger (31) und einem darauf über schräge Schlitze (33) ausweichfähig geführten Bremsschuh (32) besteht. Die anderen Bremsbacke (4) ist hier als normale einteilige Backe ausgeführt, kann aber auch aus zwei zueinander beweglichen Teilen bestehen. Im gezeigten Ausführungsbeispiel greift das Spannschloß (5) an der Sekundärbacke (4) und am Bremsträger (31) der Primärbacke (3) an, die sich auf der anderen Seite an einem ortsfesten Anschlag (34) abstützen. Bei Rückwärtsfahrt werden die Bremsbacke (4) und der Bremsträger (31) gegen die Abstützung (34) gespreizt, wobei auch der Bremsschuh (32) mit der Bremstrommel in Reibkontakt gerät. Seine Schlitzführungen (33) sind in Rückwärtsdrehrichtung schräg nach innen geneigt, so daß der Bremsschuh (32) bei Rückwärtsfahrt von der Bremstrommel weg schräg nach innen ausweichen kann, wodurch sich keine Bremskraft mehr aufbaut.

Das Stützglied (17) ist hier ebenfalls als Druckbügel (18) ausgebildet, der einerseits am Bremsschuh (32) über ein Schwenklager und andererseits an der Bremsbacke (4) über eine Schlitzführung (30) angreift. Das Bewegungsspiel in der Schlitzführung (30) ist auch hier so gemessen, daß es die Ausweichbewegung des Bremsschuhes (32) bei Rückwärtsfahrt gestattet. Erst bei weiterer Spreizung des Spannschlosses (5) und Erschöpfung des Bewegungsspiels stützt sich der Bremsschuh (32) direkt über den Druckbügel (18) an der Sekundärbacke (4) ab und schiebt diese gegen den Festanschlag (21). Die die Ausweichbewegung des Bremsschuhes (32) bestimmende Länge der Schlitzführung (33) muß dazu größer als die Summe des Bewegungsspiels in der Schlitzführung (30) und des Abstands der Sekundärbacke (4) vom Festanschlag (21) sein.

In Variation zu den gezeigten Ausführungsbeispielen der Figuren (5) und (6) kann zum Ausgleich des Bremsenverschleißes im Druckbügel (18) eine Stellvorrichtung vorgesehen sein, mit der die Bügellänge verändert werden kann. In Abwandlung von Fig. (6) kann auch die Sekundärbacke (4) einen Bremsträger mit ausweichfähigem Bremsschuh aufweisen, wobei dann das Stützglied (17) die beiden Bremsschuhe miteinander verbindet.

Stückliste

| | |
|---|---|
| (1) | Radbremse |
| (2) | Bremstrommel |
| (3) | Bremsbacke, auflaufend bei Rückwärtsfahrt, Primärbacke |
| (4) | Bremsbacke, ablaufend bei Rückwärtsfahrt, Sekundärbacke |
| (5) | Zuspanneinrichtung, Spreizschloß |
| (6) | Übertragungsglied, Ausweichnocken |
| (7) | Führungsrolle |
| (8) | Gehäuse |
| (9) | Festanschlag |
| (10) | Schwenkachse |
| (11) | Bremsschild |
| (12) | Spannschloß |
| (13) | Schraubzapfen |
| (14) | Nachstellmutter |
| (15) | Feder |
| (16) | Boden |
| (17) | Stützglied |
| (18) | Druckbügel |
| (19) | Schlitz, Schlitzführung |
| (20) | Ringkragen |
| (21) | Festanschlag |
| (22) | Schwenknocken |
| (23) | Flansch |
| (24) | Anschlagfläche |
| (25) | Drehachse |
| (26) | Anlagefläche |
| (27) | Anlagefläche |
| (28) | Bund |
| (29) | Übertragungsnocken |
| (30) | Schlitzführung, Schlitz |
| (31) | Bremsträger |
| (32) | Bremsschuh |
| (33) | Schlitzführung, Schlitz |
| (34) | Abstützung, Anschlag |

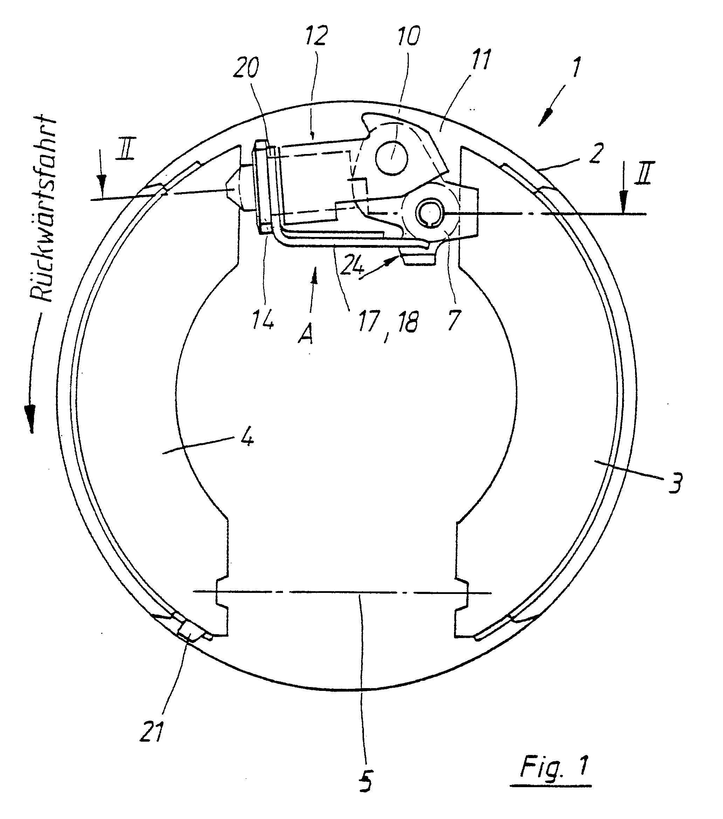

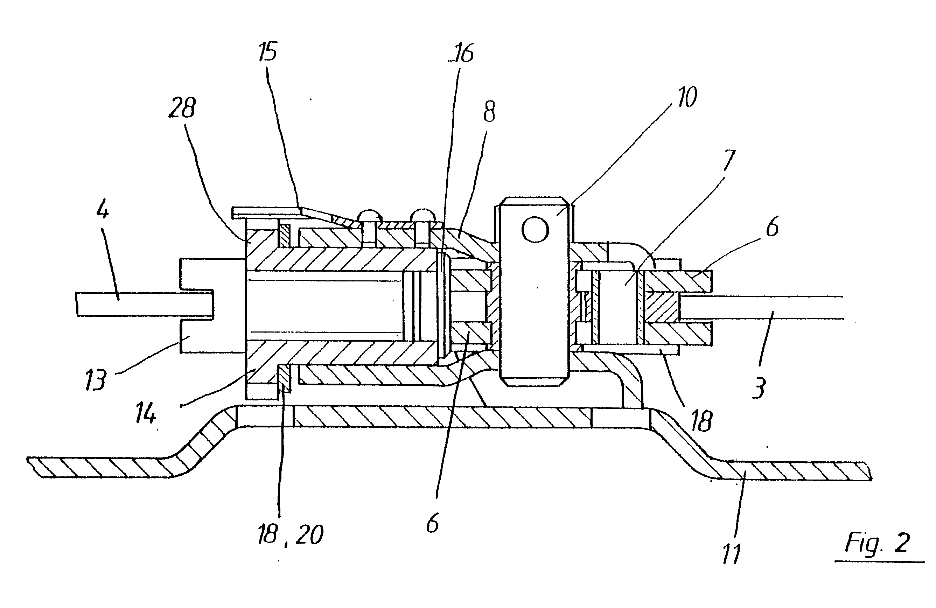

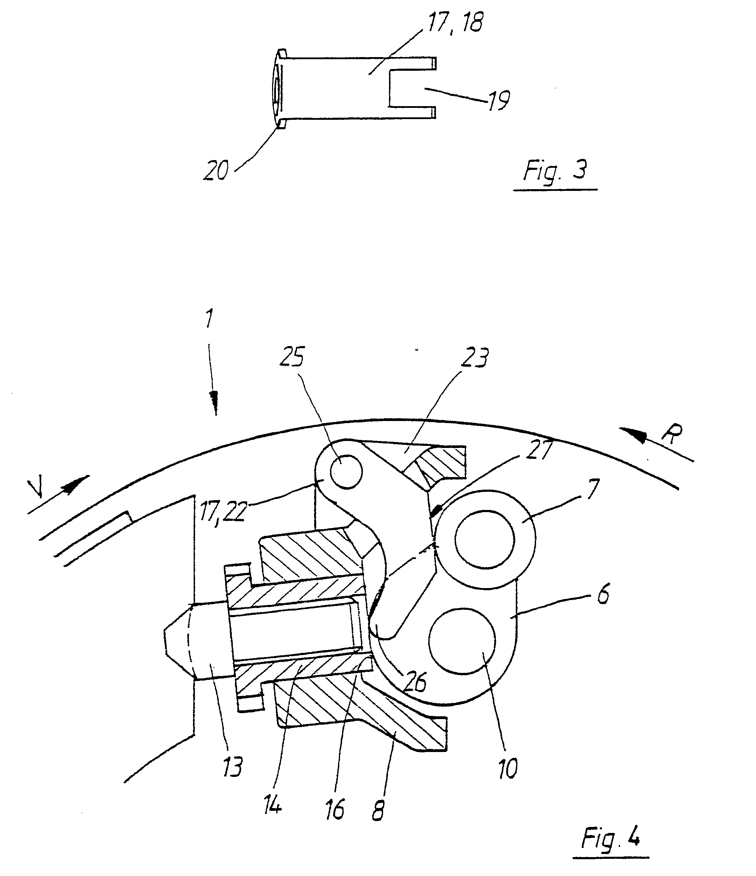

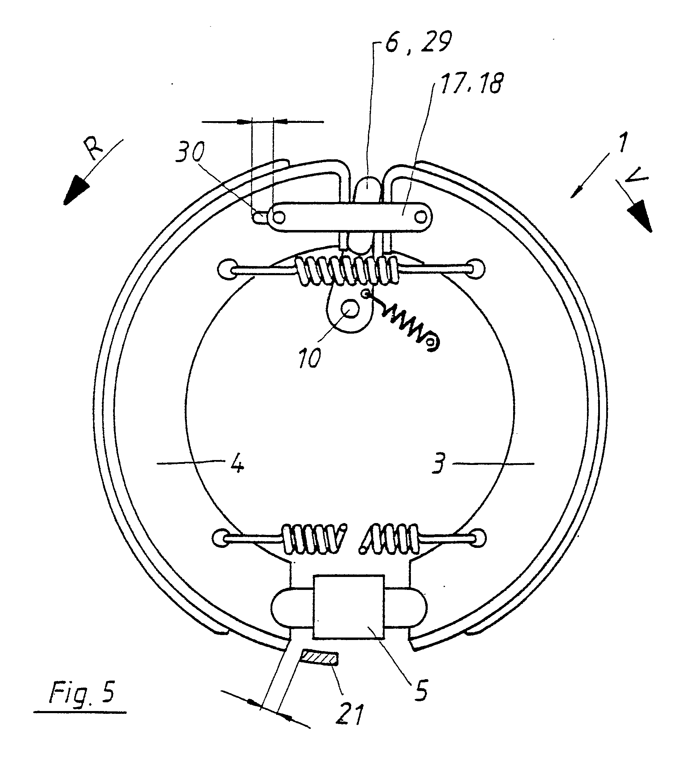

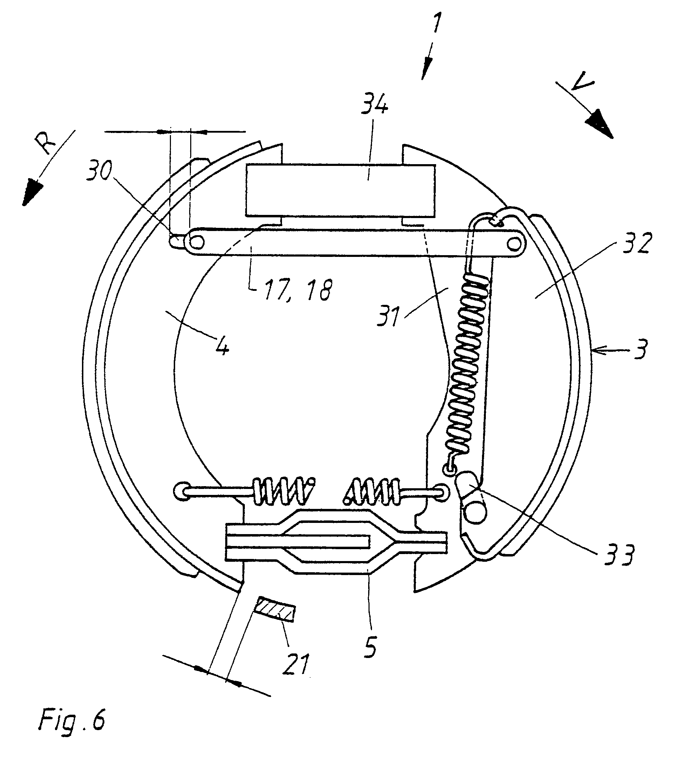

**Patentansprüche**

1. Radbremse für Anhänger, die mittels einer Auflaufvorrichtung und einer Handbremseinrichtung betätigbar ist und zwei Bremsbacken (3,4) aufweist, die auf der einen Seite durch eine schwimmend gelagerte Zuspanneinrichtung (5) und auf der anderen Seite durch ein Übertragungsglied (6,34) miteinander verbunden sind, wobei die Bremsbacken (3,4) sich bei Rückwärtsfahrt und Betätigung durch die Auflaufvorrichtung einander unter Minderung der Bremswirkung annähern und bei Betätigung durch die Handbremseinrichtung in Rückwärtsfahrt die volle Bremswirkung mit Servoeffekt entfalten, indem sich beide Bremsbacken (3,4) gemeinsam an einem Festanschlag (21) abstützen, dadurch **gekennzeichnet,** daß zwischen den beiden Bremsbacken (3,4) in Reihe oder parallel zum Übertragungsglied (6,34) ein Stützglied (17) angeordnet ist, das Bewegungsspiel aufweist und nur bei Rückwärtsfahrt wirksam ist, wobei sich zum Bremsen in Rückwärtsfahrt die auflaufende Primär-Bremsbacke (3) über das Stützglied (17) an der ablaufenden Sekundär-Bremsbacke (4) abstützt und durch das Bewegungsspiel eine gegenseitige Abstützung der Bremsbacken (3,4) erst nach Ausweichen der auflaufenden Primär-Bremsbacke (3) erfolgt.

2. Radbremse nach Anspruch 1, dadurch **gekennzeichnet,** daß das Bewegungsspiel des Stützgliedes (17) geringfügig größer als der durch die Auflaufeinrichtung verursachte Zuspannweg an den Bremsbacken (3,4) ist.

3. Radbremse nach Anspruch 1 oder 2, dadurch **gekennzeichnet,** daß der Ausweichweg der bei Rückwärtsfahrt auflaufenden Primär-Bremsbacke (3) größer ist als die Summe des Bewegungsspiels des Stützgliedes (17) und des Abstands der Sekundär-Bremsbacke (4) vom Festanschlag (21).

4. Radbremse nach Anspruch 1, 2 oder 3, dadurch **gekennzeichnet,** daß das Stützglied (17) parallel zum Übertragungsglied (6) angeordnet ist und die beiden Bremsbacken (3,4) direkt miteinander verbindet, wobei das Stützglied (17) an einer Bremsbacke (3,4) über eine Schlitzführung (30) angreift.

5. Radbremse nach Anspruch 1, 2 oder 3, dadurch **gekennzeichnet,** daß das Stützglied (17) in Reihe zum Übertragungsglied (6) angeordnet ist und die ablaufende Sekundär-Bremsbacke (4) mit dem Übertragungsglied (6) verbindet, wobei das Stützglied (17) am Übertragungsglied (6) über eine Schlitzführung (19) angreift.

6. Radbremse nach Anspruch 1, 2 oder 3, dadurch **gekennzeichnet,** daß zumindest eine Bremsbacke (3,4) aus einem Bremsträger (31) mit einem darauf ausweichfähig gelagerten Bremsschuh (32) besteht, wobei das Stützglied (17) den Bremsschuh (32) der einen Bremsbacke (3) mit der anderen Bremsbacke (4) verbindet und an einer Bremsbacke (3,4) über eine Schlitzführung (30) angreift.

7. Radbremse nach Anspruch 5, dadurch **gekennzeichnet,** daß das Stützglied (17) ablaufseitig an einem längenverstellbaren, sowie axial beweglich in einem Gehäuse (8) geführten Spannschloß (12) angreift, das zwischen der Sekundär-Bremsbacke (4) und dem Übertragungsglied (6) angeordnet ist.

8. Radbremse nach Anspruch 7, dadurch **gekennzeichnet,** daß das Stützglied (17) als abgewinkelter Druckbügel (18) ausgebildet ist, dessen Ringkragen (20) auf der Nachstellmutter (14) des Spannschlosses (12) axial beweglich geführt ist und sich am Bund (28) der Nachstellmutter (14) abstützt.

9. Radbremse nach Anspruch 5, 7 und 8, dadurch
**gekennzeichnet,** daß der Druckbügel (18) am anderen Ende einen Schlitz (19) aufweist, in den das Übertragungsglied (6) mit Bewegungsspielraum greift, wobei das Übertragungsglied (6) einen in Drehrichtung zurückversetzten Anschlag (24) besitzt, mit dem es am Druckbügel (18) nach Erschöpfung des Bewegungsspielraumes angreift.

10. Radbremse nach Anspruch 5, dadurch **gekennzeichnet,** daß das Stützglied (17) als frei beweglicher Schwenknocken (22) mit ortsfester Drehachse (25) und zwei Anlageflächen (26,27) ausgebildet ist, wobei an der einen Anlagefläche (27) das Übertragungsglied (6) angreift und den Schwenknocken (22) mit der anderen, nasenförmigen Anlagefläche (26) gegen den Boden (16) des Spannschlosses (12) drückt.

11. Radbremse nach Anspruch 10, dadurch **gekennzeichnet,** daß das Übertragungsglied (6) als gabelförmiger, schwenkbarer Ausweichnocken ausgebildet ist, der mit seinen als Anlaufkurve ausgebildeten Enden den Schwenknocken (22) umgreift und mit einer innenliegenden Führungsrolle (7) auf dessen Anlagefläche (27) drückt.

12. Radbremse nach Anspruch 1 oder einem der folgenden,
dadurch **gekennzeichnet,** daß der Festanschlag (21) am zuspannungsseitigen Ende der Sekundär-Bremsbacke (4) angeordnet ist.

**Claims**

1. Wheel brake for trailers, which may be operated by means of a leading apparatus and a hand brake device and which has two brake shoes (3, 4) connected to each other on one side by means of a float-mounted tensioning device (5) and on the other side by means of a transmission element (6, 34), the brake shoes (3, 4) during reverse travel and when operated by means of the leading apparatus approaching each other with a reduction of the braking effect and when operated by means of the handbrake device during reverse travel deploying the full braking effect with servo action, where the two brake shoes (3, 4) are supported jointly on a positive stop (21), characterized in that there is arranged between the two brake shoes (3, 4), in series with or parallel to the transmission element (6, 34), a supporting element (17) which has play for motion and is only active during reverse travel, the leading primary brake shoe (3), for the purpose of braking during reverse travel, being supported on the trailing secondary brake shoe (4) by way of the supporting element (17) and as a result of the play for motion a mutual supporting of the brake shoes (3, 4) being achieved only after the leading primary brake shoe (3) has yielded.

2. Wheel brake according to Claim 1, characterized in that the play for motion of the supporting element (17) is slightly larger than the tensioning travel on the brake shoes (3, 4), caused by the leading apparatus.

3. Wheel brake according to Claim 1 or 2, characterized in that the yielding travel of the leading primary brake shoe (3) during reverse travel is larger than the sum of the play for motion of the supporting element (17) and the spacing of the secondary brake shoe (4) from the positive stop (21).

4. Wheel brake according to Claim 1, 2 or 3, characterized in that the supporting element (17) is arranged parallel to the transmission element (6) and connects the two brake shoes (3, 4) directly to each other, the supporting element (17) acting on a brake shoe (3, 4) by way of a slot guide (30).

5. Wheel brake according to Claim 1, 2 or 3, characterized in that the supporting element (17) is arranged in series with the transmission element (6) and connects the trailing secondary brake shoe (4) to the transmission element (6), the supporting element (17) acting on the transmission element (6) by way of a slot guide (19).

6. Wheel brake according to Claim 1, 2 or 3, characterized in that at least one brake shoe (3, 4) comprises a brake anchor plate (31) with a brake block (32) mounted thereon such that it may yield, the supporting element (17) connecting the brake block (32) of one brake shoe (3) to the other brake shoe (4) and acting on a brake shoe (3, 4) by way of a slot guide (30).

7. Wheel brake according to Claim 5, characterized in that the supporting element (17) acts on the trailing side on a turnbuckle (12) which is adjustable in length, is guided axially movably in a housing (8), and is arranged between the secondary brake shoe (4) and the transmission element (6).

8. Wheel brake according to Claim 7, characterized in that the supporting element (17) is constructed as an angled clamp strap (18), the annular collar (20) of which is guided axially movably on the adjusting nut (14) of the turnbuckle (12) and is supported on the shoulder (28) of the adjusting nut (14).

9. Wheel brake according to Claim 5, 7 and 8, characterized in that the clamp strap (18) has on the other end a slot (19) in which the transmission element (6) engages with play for motion, the transmission element (6) having a stop (24) set back in the direction of rotation, by means of which it acts on the clamp strap (18) after it has used up the play for motion.

10. Wheel brake according to Claim 5, characterized in that the supporting element (17) is constructed as a freely movable pivot lug (22) with a stationary axis (25) of rotation and two bearing surfaces (26, 27), the transmission element (6) acting on one bearing surface (27) and pressing the pivot lug (22) by means of the other, nose-shaped bearing surface (26) against the base (16) of the turnbuckle (12).

11. Wheel brake according to Claim 10, characterized in that the transmission element (6) is constructed as a fork-shaped, pivotal yielding lug which with its ends constructed as a rise curve runs around the pivot lug (22) and presses on the bearing surface (27) thereof by means of an inner guide roller (7).

12. Wheel brake according to Claim 1 or one of the subsequent claims, characterized in that the positive stop (21) is arranged on the tensioning-side end of the secondary brake shoe (4).

**Revendications**

1. Frein de roue pour remorque, qui peut être actionné au moyen d'un dispositif à inertie et d'un dispositif de frein à main et comporte deux mâchoires de frein (3,4), qui sont raccordées entre elles d'un côté au moyen d'un dispositif de serrage (5) monté flottant et, de l'autre côté, par un organe de transmission (6,34), et dans lequel les mâchoires de frein (3,4) se rapprochent l'une de l'autre en réduisant l'action de freinage lors d'une marche arrière et d'un actionnement par le dispositif d'inertie, et produisent l'action complète de freinage avec effet de servofrein lors de leur actionnement par le dispositif de freinage à main, par le fait que les deux mâchoires de frein (3,4) prennent appui en commun contre une butée fixe (21), caractérisé par le fait qu'entre les deux mâchoires de frein (3,4) est disposé, en série ou en parallèle avec l'organe de transmission (6,34), un élément d'appui (17), qui présente le jeu de déplacement et n'est actif que lors d'une marche arrière, auquel cas pour le freinage dans le cas de la marche arrière, la mâchoire de frein primaire comprimée (3) prend appui, par l'intermédiaire de l'élément d'appui (17), sur la mâchoire de frein secondaire tendue (4) et un appui réciproque des mâchoires de frein (3,4) intervient uniquement après l'écartement de la mâchoire de frein primaire comprimée (3) en raison du jeu de déplacement.

2. Frein de roue suivant la revendication 1, caractérisé par le fait que le jeu de déplacement de l'élément d'appui (17) est légèrement supérieur à la course de serrage, fournie par le dispositif à inertie, au niveau des mâchoires de frein (3,4).

3. Frein de roue suivant la revendication 1 ou 2, caractérisé par le fait que le trajet d'écartement de la mâchoire de frein primaire (3) comprimée lors de la marche arrière est supérieur à la somme du jeu de déplacement de l'élément d'appui (17) et de la distance entre la mâchoire de frein secondaire (4) et la butée fixe (21).

4. Frein de roue suivant la revendication 1,2 ou 3, caractérisé par le fait que l'élément d'appui (17) est disposé parallèlement à l'organe de transmission (6) et relie directement entre elles les deux mâchoires de frein (3,4), auquel cas l'élément d'appui (17) attaque une mâchoire de frein (3,4) par l'intermédiaire d'un guide en forme de fente (30).

5. Frein de roue suivant la revendication 1, 2 ou 3, caractérisé par le fait que l'élément d'appui (17) est disposé en série avec l'organe de transmission (6) et raccorde la mâchoire de frein secondaire tendue (4) à l'organe de transmission (6), l'élément d'appui (17) attaquant l'organe de transmission (6) par l'intermédiaire d'un guide en forme de fente (19).

6. Frein de roue suivant la revendication 1, 2 ou 3, caractérisé par le fait qu'au moins une mâchoire de frein (3,4) est constituée par un support de frein (31) sur lequel est monté, de façon à pouvoir s'écarter, un sabot de frein (32), l'élément d'appui (17) raccordant le sabot de frein (32) d'une mâchoire de frein (3) à l'autre mâchoire de frein (4) et attaquant une mâchoire de frein (3,4) par l'intermédiaire d'un guide en forme de fente (30).

7. Frein de roue suivant la revendication 5, caractérisé par le fait que l'élément d'appui (17) attaque, sur le côté sortie, un tendeur (12), dont la longueur est réglable et qui est guidé de manière à être déplaçable axialement dans un carter (8) et est disposé entre la mâchoire de frein secondaire (4) et l'organe de transmission (6).

8. Frein de roue suivant la revendication 7, caractérisé par le fait que l'élément d'appui (17) est agencé sous la forme d'un étrier coudé de pression (18), dont le collet annulaire (20) est guidé de manière à être déplaçable axialement sur l'écrou de réglage (14) du tendeur (12) et prend appui sur le collet (28) de l'écrou de réglage (14).

9. Frein de roue suivant les revendications 5, 7 et 8, caractérisé par le fait que l'étrier de pression (18) possède, à son autre extrémité, une fente (19), dans laquelle l'organe de transmission (6) s'engage avec un jeu de déplacement, l'organe de transmission (6) possédant une butée (24), qui est en retrait dans le sens de rotation et au moyen de laquelle il attaque l'étrier de pression (18) après avoir franchi le jeu de déplacement.

10. Frein de roue suivant la revendication 5, caractérisé par le fait que l'élément d'appui (17) est agencé sous la forme d'une came pivotante librement mobile (22) possédant un axe de rotation fixe (25) et deux surfaces d'application (26,27), l'organe de transmission (6) attaquant l'une (27) des surfaces d'application et repoussant la came pivotante (22) au niveau de l'autre surface d'application (26) en forme de bec, contre la base (16) du tendeur (12).

11. Frein de roue suivant la revendication 10, caractérisé par le fait que l'organe de transmission (6) est réalisé sous la forme d'une came d'écartement pivotante en forme de fourche, qui enserre la came pivotante (22) par ses extrémités réalisées sous la forme d'une courbe d'attaque, et s'applique par un galet intérieur de guidage (7) contre la surface d'application (27) de la came.

12. Frein de roue suivant la revendication 1 ou l'une des revendications suivantes, caractérisé par le fait que la butée fixe (21) est disposée sur l'extrémité, côté serrage, de la mâchoire de frein secondaire (4).

*Fig. 1*

Fig. 2

EP 0 261 660 B1

Fig. 3

Fig. 4

EP 0 261 660 B1

Fig. 5

Fig. 6

14